# EUROPEAN PATENT APPLICATION

(11) **EP 2 251 995 A1**
(43) Date of publication of application: **17.11.2010**
(21) Application number: 08711014.4
(22) Date of filing: 08.02.2008
(51) Int. Cl.: H04H 60/72, H04H 60/25, H04H 60/40, H04H 60/91, H04N 7/173

(54) **RECEIVING DEVICE, RECEIVING METHOD AND RECEIVING PROGRAM**

(71) Applicant: Fujitsu Limited, Kawasaki-shi, Kanagawa 211-8588 (JP)
(72) Inventor: OHBITSU, Toshiro, Kawasaki-shi Kanagawa 211-8588 (JP)
(74) Representative: Fenlon, Christine Lesley
(86) International application number: PCT/JP2008/052135
(87) International publication number: WO 2009/098775

(57) **Abstract**

Technology for supplementing guide information with a simple structure even in the case of deficiency of guide information is provided in a device receiving a broadcast wave, reproducing a program and displaying guide information. The receiving device receives the broadcast wave where the program and attached data are multiplexed from a broadcast station, and extracts guide information from the received attached data. In the case of deficiency of the guide information extracted from the attached data, the receiving device makes a connection to a server indicated by the attached data so as to acquire a web page supplied by the server, generates guide information from the web page and complements the guide information.

## Description

### TECHNICAL FIELD

The present invention relates to a technology of acquiring guide information by receiving broadcast data.

### BACKGROUND ART

The majority of receiving devices for BS broadcasting and other digital broadcasting have a function of receiving and displaying guide information (EPG: Electronic Program Guide) of programs to be broadcasted. Further, a record reservation function utilizing the EPG is also realized.

A dominant type of receiving device of the digital broadcasting has hitherto been a stand-alone type of device, and it has been difficult to manufacture a receiving device as a portable type of device in terms of problems of processing performance, a storage capacity, etc. In recent years, however, an environment in which the portable device receives the digital broadcasting has been completed such as improving the processing performance of the device, downsizing the processing device and settling upon the transmission standards for portable reception.

Further, for example, technologies disclosed in the following Patent documents are given as the prior arts related to the present invention.

[Patent document 1]
   Japanese Patent Laid-Open Publication No. 2006-41583
[Patent document 2]
   Japanese Patent Laid-Open Publication No. 2005-33546

### DISCLOSURE OF THE INVENTION

### PROBLEMS TO BE SOLVED BY THE INVENTION

There exist some methods by which a broadcasting receiver displays the EPG, however, in the domestic digital broadcasting in Japan, a broadcasting station transmits mainly program information data from an Event Information Table down, which is called EIT, by utilizing VBI (Vertical Blanking Interval). The broadcasting receiver receives and analyzes the program information data and accumulates the data on a memory. A basic function provided in the general EPG is that information of a channel called a service and program information such as a title of a program called an event, a content and start time of the program are displayed on a time basis.

An operation of the BS digital broadcasting involves, with respect to TV programs, continuing to transmit TV program information periodically for 8 days in order to enable 8-day program information to be displayed.

On the other hand, in digital terrestrial broadcasting, the program information is transmitted similarly by use of the EIT, however, there exist three types of EITs having different information quantities, which are targeted at a fixed receiver, a mobile receiver and a portable receiver. An Event Information Table provided for the fixed receiver is called H-EIT, an Event Information Table provided for the mobile receiver is called M-EIT, and an Event Information Table provided for the one-segment receiver is called L-EIT, respectively. With respect to the EIT for the fixed receiver, substantially the same operation as in the BS digital broadcasting is conducted, and the receiver can display the 8-day TV program information.

In the broadcasting for the fixed receiver, the transmission for one channel is performed normally with a bandwidth of approximately 12 segments (which will hereinafter be also termed full-segments), however, the broadcasting for the portable receiver is carried out with a bandwidth of one-segment (which will hereinafter simply be referred to as one-seg). This is because a displayable resolution of a display device of the portable receiver is relatively low and a display screen size is small, with the result that a picture quality sufficient for actual use can be ensured by video signals of even a low bit rate. Along with this, the L-EIT defined as the program information for the portable receiver has a smaller information quantity than the H-EIT has. According the operation rules of the digital terrestrial broadcasting, an event count, which can be transmitted based on the L-EIT is 10 events at the maximum, and only the program information of the 10 programs at the maximum including a now-broadcastedprogram and subsequent programs is transmitted. There is a case where none of the program information is provided depending on the broadcasting station. In short, the number of the programs, which can be displayed as the EPG by the portable receiver, is smaller than that of the fixed receiver, and normally the portable receiver can neither accumulate nor display the program guide for one day.

Namely, the portable receiver, even when trying to reserve the recording by use of the EPG, can reserve the recording of tenth future program at the maximum.

Therefore, the portable receiver is requested to utilize the program information of programs further than the 10 programs as in the case of the fixed receiver.

Japanese Patent Laid-Open Publication No. 2006-41583 describes that even the portable receiver, which receives the one-segment broadcasting, acquires the same EPG information as by the reception of the full-segment broadcasting.

A configuration of Japanese Patent Laid-Open Publication No. 2006-41583 is, however, that a tuner for the full-segment broadcasting is built in the portable receiver, or the portable device captures the EPG information received in the full-segment broadcasting by establishing a connection with another device including the tuner for the full-segment broadcasting.

According to this configuration, the tuner for receiving the full-segment broadcasting is indispensable, which cancels out, it is undesirable, such a superior point inherent in the portable device that a circuit scale is reduced by employing the one-segment tuner.

Further, according to Japanese Patent Laid-Open Publication No. 2005-33546, a server obtains information from a database of iEPG and saves this information, and a device performing TV display acquires the EPG information from the server. The database of the iEPG is structured not to transmit the information of the TV programs individually but to one-sidedly distribute updated data of all channels, and hence a server is required, which accumulates the updated data in a search-enabled status, then searches out the guide information of the program requested by a receiving device and transmits the program guide information to this receiving device. Accordingly, the system of Japanese Patent Laid-Open Publication No. 2005-33546 has a problem that the server must be maintained and managed in order to obtain the guide information by utilizing the iEPG.

Such being the case, there is provided a technology by which the receiving device obtains the guide information with a simple configuration.

### MEANS FOR SOLVING THE PROBLEMS

In order to solve the problems given above, following configurations are adopted to a receiving device, a receiving method and a receiving program.

That is, the receiving device includes a receiving unit to receive broadcasting waves multiplexed with a program and attached data from a broadcasting station; a guide information extracting unit to extract guide information from the received attached data; a Web page acquiring unit to acquire, if the guide information extracted from the attached data is deficient, a Web page provided by a server by establishing a connection with the server specified by the attached data; and a complementation unit to generate further pieces of guide information from the Web page and to complement the guide information with the generated pieces of guide information.

The receiving device may have a display control unit to get the guide information displayed on a display unit and/or a record control unit to get the program recorded in a storage unit on the basis of the guide information.

The Web page acquiring unit may, if guide information other than the guide information extracted from the attached data is requested or if guide information other than the post-complementing guide information is requested, determines that the guide information is deficient and acquires the Web page from the server.

Further, the receiving method executed by a receiving device includes a step of receiving broadcasting waves multiplexed with a program and attached data from a broadcasting station; a step of extracting guide information from the received attached data; a step of acquiring, if the guide information extracted from the attached data is deficient, a Web page provided by a server by establishing a connection with the server specified by the attached data; and a step of generating further pieces of guide information from the Web page and complementing the guide information with the generated pieces of guide information.

The receiving method may further include a step of making a display unit display the guide information, a step of recording the program a storage unit on the basis of the guide information.

The receiving method can be modified a method of determining that the guide information is deficient if guide information other than the guide information extracted from the attached data is requested or if guide information other than the post-complementing guide information is requested, and acquiring the Web page from the server.

Further, the receiving program may be a program to make a computer execute the method described above. Still further, the present invention may also be a computer-readable recording medium stored with this receiving program. The computer is made to read and execute the program on this recording medium, thereby enabling the functions thereof to be provided.

Herein, the computer-readable recording medium connotes a recording medium capable of storing information such as data and programs electrically, magnetically, optically, mechanically or by chemical action, which can be read by the computer. Among these recording mediums, for example, a flexible disc, a magneto-optic disc, a CD-ROM, a CD-R/W, a DVD, a DAT, an 8 mm tape, a memory card, etc. are given as those removable from the computer.

Further, a hard disk, a ROM (Read-Only Memory), etc. are given as the recording mediums fixed within the computer.

### EFFECTS OF THE INVENTION

According to the present invention, it is feasible to provide the technologies capable of obtaining the guide information with a simple configuration.

### BRIEF DESCRIPTION OF THE DRAWINGS

FIG. 1 is a function block diagram of a receiving device;

FIG. 2 is a schematic diagram of a personal computer serving as the receiving device;

FIG. 3 is an explanatory flowchart of a receiving method;

FIG. 4 is a diagram illustrating one example of a selection menu;

FIG. 5 is a diagram illustrating a screen example when displaying a program guide;

FIG. 6 is a diagram illustrating an example of an acquired Web page;

FIG. 7 is a diagram illustrating an example of the acquired Web page; and

FIG. 8 is a diagram illustrating an example of the acquired Web page.

### BEST MODE OF CARRYING OUT THE INVENTION

### <First Embodiment>

The following is a description of a receiving device including a function of receiving digital television (one-segment) broadcasting and displaying/recording TV programs. A configuration in the following embodiment is an exemplification, and the present invention is not necessarily limited to this configuration.

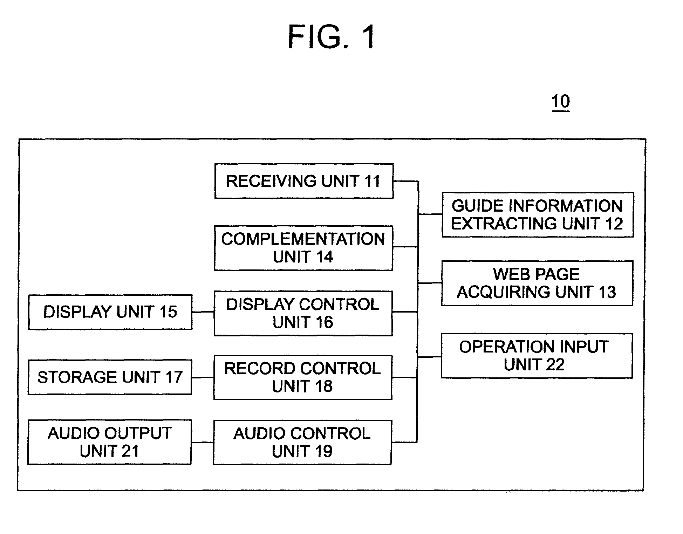

FIG. 1 is a function block diagram of the receiving device according to the present embodiment. A receiving device 10 is a receiving terminal capable of receiving digital broadcasting signals froman unillustrated broadcasting station and is, e.g., a mobile terminal such as a mobile phone capable of receive the digital broadcasting signals of the one-segment broadcasting. In the digital terrestrial broadcasting, a band of 6 MHz (megahertz) is divided into 13 segments, in which a high-definition TV program is broadcasted by utilizing the 12 segments in the 13 segments, and the program having the same content is down-converted for the mobile terminals and broadcasted by use of one segment. The broadcasting, which utilizes this one segment is called the "one-segment broadcasting". Namely, the one-segment broadcasting is the digital broadcasting oriented to the mobile terminals in a way that restrains a resolution and a frame rate.

The receiving device 10 includes, as illustrated in FIG. 1, a receiving unit (TV tuner) 11, a guide information extracting unit 12, a Web page acquiring unit 13, a complementation unit 14, a display unit 15 which displays the TV programs and guide information, a display control unit 16, a storage unit 17, a record control unit 18, an audio control unit 19, an audio output unit 21 and an operation input unit 22.

The receiving unit 11 receives broadcasting waves multiplexed with a program and attached data from a broadcasting station, and demodulates modulation induced by an OFDM (Orthogonal Frequency Division Multiplexing) transmission method, thereby acquiring transport stream signals (which will hereinafter be abbreviated to "TS signals") such as MPEG2 (Moving Picture Experts Group 2)-TS (Transport Stream) signals defined as digital signals.

Then, the receiving unit 11 separates the TS signals into TS packets. The TS packets are classified into a video packet representing video data, an audio packet representing audio data and an attached information packet representing the attached data.

In this embodiment, the program is compiled from the video data and the audio data and may also be, without being limited to this structure, compiled from only the video data or the audio data.

The attached data includes subtitle information, guide information (L-EIT), data broadcasting information, etc. The guide information extracting unit 12 extracts the guide information from the thus-received attached information packets.

The Web page acquiring unit 13 acquires, if deficient of the guide information extracted from the attached data, a Web page provided by a server by establishing a connection to this server of a link destination specified by the attached data.

The Web page acquiring unit 13 determines, for example in the case of being requested to acquire the guide information, being requested to acquire the guide information other than the guide information extracted from the attached data or being requested to acquire the guide information other than the post-complementing guide information, that the guide information is deficient and therefore acquires the Web page from the server.

The complementation unit 14 generates items of guide information from the Web page and thus complements the guide information with these generated items of guide information.

The display unit 15 is exemplified by a liquid crystal display device, a plasma display panel, a CRT (Cathode Ray Tube), an electroluminescence panel, etc. Note that the display unit 15 includes, though not illustrated, a RAM stored with image data and a drive circuit which drives the display unit 15 on the basis of the data in the RAM. The RAM stored with the image data, the drive circuit which drives the display unit 15, and so on may, however, be provided as an image processing board, independently. In this case, items of data structuring screen information given from the display control unit 16 are inputted to the image processing board.

The display control unit 16 outputs, to the display unit 15, video signals into which the video packets are decoded, thereby making the display unit 15 display pictures of the TV program. Further, the display control unit 16 makes the program guide (guide information) or data broadcasting the display unit 15 display the program guide (guide information) or the TV program.

The audio control unit 19 generates audio signals by decoding the audio packets and outputs the audio signals to the audio output unit 21. The audio signals, which are output from the audio control unit 19, are output as sounds (voices) by the audio output unit 21 built up by a loudspeaker etc.

The storage unit 17 is a storage device, such as a hard disk and a flash memory, having a comparatively large capacity and is stored with the TV programs and the guide information.

The record control unit 18 gets the storage unit 17 stored with the video data, the audio data and the attached data, thus recording the TV programs and the program guide (guide information).

The operation input unit 22, upon receiving a user's operation such as selecting a TV channel and making a record reservation, inputs information representing this operation to other units.

The respective units of the receiving device 10 may be constructed of dedicated electronic circuits (hardware), and at least some of these individual units may be realized softwarewise by getting programs to run on a general-purpose computer.

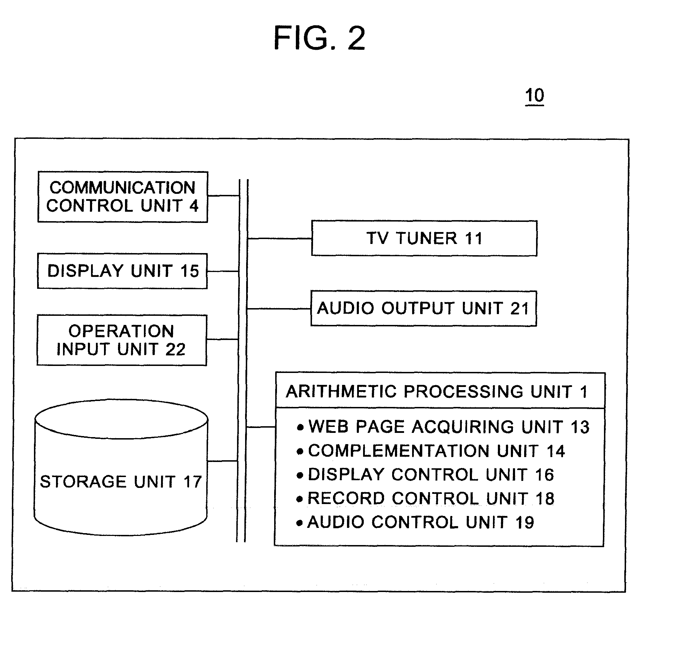

FIG. 2 is a schematic diagram of a personal computer serving as the receiving device in the embodiment.

A computer 10 includes an arithmetic processing unit 1, a communication control unit 4, a receiving unit (TV tuner) 11, a display unit 15, a storage unit 17, an audio output unit 21 and an operation input unit 22.

The operation input unit 22 is exemplified such as a keyboard and a pointing device. Further, the operation input unit 22 includes a remote controller operation unit constructed of a combination of an infrared-ray receiving unit and an infrared-ray remote controller, a variety of switches, a knob for manipulating the channels, and so on. The pointing device is not limited to a particular type and may involve using a proper device such as a mouse, a trackball, a dial-type operation unit, a stick-type device for moving a pointer on the display unit 15, a device for detecting a finger manipulation of the user on the basis of an electrostatic capacity, a touch panel and a joystick, corresponding to characteristics of the computer 10 and needs of the users.

The keyboard transmits, corresponding to an input operation of the user, an electronic signal corresponding to the inputted key to an unillustrated keyboard controller. The keyboard controller transmits a code corresponding to this electric signal to the arithmetic processing unit 1.

The communication control unit 4 controls communications with other computers via a network. The communication control unit 4 is exemplified by a network card for establishing a connection to the network such as the Internet via a router, a wireless LAN module for connecting with a wireless access point, a communication module which performs data communications via a mobile phone network, and so forth.

The storage unit 13 is preinstalled with an operating system (OS) and application software (a receiving program etc.) in addition to the user data such as the TV programs and the guide information.

The arithmetic processing unit 1, which is constructed of a CPU, a main memory, etc., properly reads the OS and the application program from the storage unit 17, then executes these software components, and arithmetically processes the information inputted from the operation input unit 3 and from the communication control unit 4 and the information read from the storage unit 17. As a result of this process, the arithmetic processing unit 1 sends instructions to the respective units and gets these units to conduct operations corresponding to the instructions, thereby functioning also as the Web page acquiring unit 13, the complementation unit 14, the display control unit 16, the record control unit 18 and the audio control unit 19.

The receiving device 10 acquires, on the occasion of receiving the one-segment broadcasting, the guide information and displays the program guide. When the user selects a desired program from the program guide, the receiving device 10 makes the record reservation on the basis of a channel number, broadcast start time, broadcast end time of the program, which are contained in the EPG information.

Herein, the guide information of the one-segment broadcasting is restricted to 10 programs, and hence, if the user desires a program posterior to the 10 programs, the record reservation can not be made by use of the electronic program guide (EPG) which does not contains any information of this program.

Such being the case, the receiving device 10 in the embodiment acquires the Web page by connecting with the server of the link destination on the basis of the link which specifies a Web site of the broadcasting station in the data described in markup language (BML (Broadcast Markup Language) in the embodiment) of the data broadcasting, and generates the guide information from the Web page. With this acquisition, even if the EPG information is deficient, the EPG information can be complemented in a way that acquires the Web page from on the Web site of the broadcasting station via the network such as the Internet.

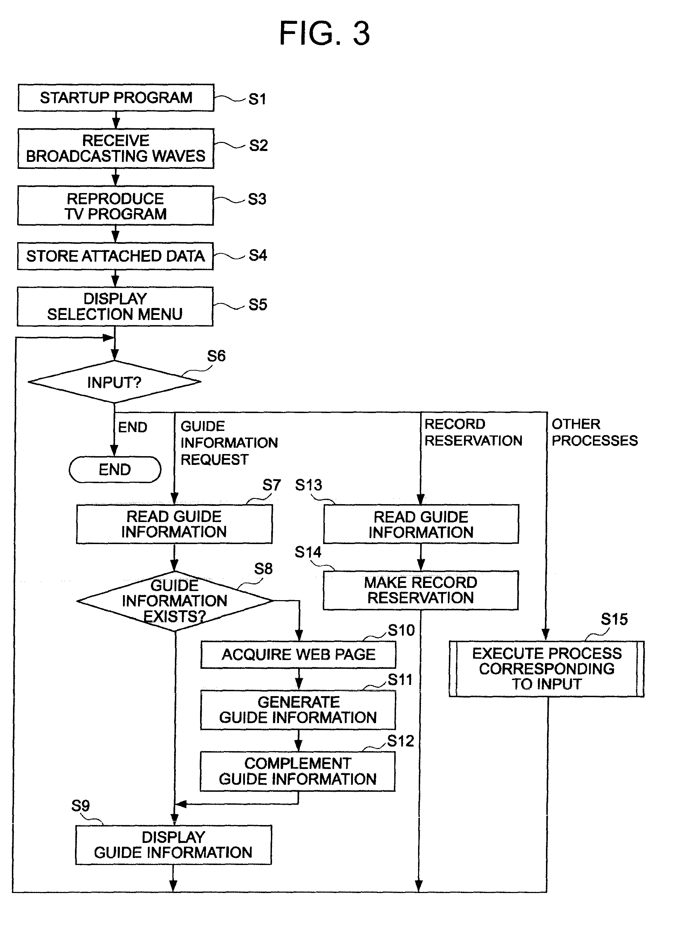

FIG. 3 is an explanatory flowchart of a receivingmethod executed by the computer 10 according to the receiving program.

When starting up the application software (receiving program) for the TV (step 1, which will hereinafter be abbreviated as S1), the tuner 11 receives the broadcasting waves, thus acquiring the video data, the audio data and the attached data of the channel selected by the user (S2).

The display control unit 16 gets the picture displayed based on the video data and the audio control unit 19 gets the sounds outputted, thereby the TV program is reproduced (S3).

Further, the arithmetic processing unit 1 stores the received attached data in the storage unit 17 (S4), while the display control unit 16 displays a selection menu of the data (S5).

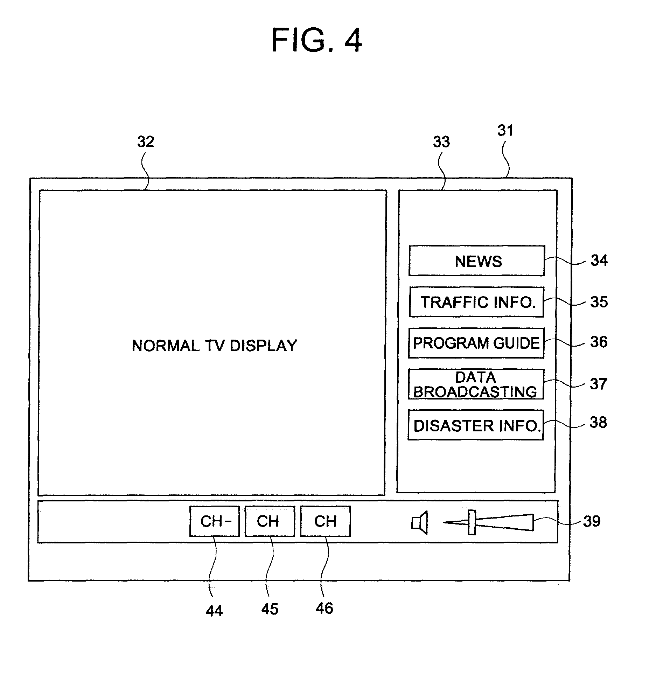

In the embodiment, as illustrated in FIG. 4, in a main window 31 of the TV application software, a moving picture of the received TV program is displayed in a TV display window 32, the selection menu is displayed in a data display window 33, and channel manipulation buttons and a volume manipulation button are displayed in a manipulation window 39.

An example of the selection menu depicted in FIG. 4 is that buttons 34-38 are displayed, which serve to select menus such as news, traffic information, the program guide (EPG), a data broadcasting top-page and disaster information. The news of the data broadcasting, the traffic information or the EPG can be displayed by selecting the corresponding button among the buttons 34-38.

Then, the computer 10, in a status of the TV program kept displaying, stands by for an EPG request and an input of the user's operation (S6). The operation is, though diverged into multiple functions corresponding to this input, illustrated, for the convenience's sake in FIG. 3, with classification into a guide information request process, a record reservation process using the program guide, an end process and other processes.

The user, in the case of making a request for displaying the program guide, presses (selects) the program guide button 36 by manipulating the operation input unit 22. A signal purporting that the program guide button 36 has been pressed, i.e., the guide information acquiring request, is thereby inputted from the operation input unit 22 (S6), and the display control unit 16 reads, from the storage unit 17, the guide information extracted by the guide information extracting unit 12 (S7).

Then, if the requested guide information exists in the storage unit 17 (S8), this guide information is displayed (S9).

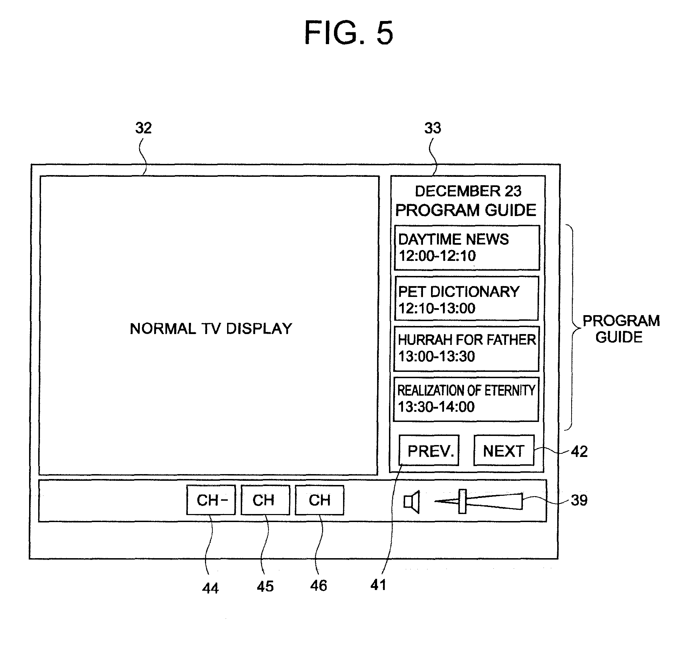

In the embodiment, as illustrated in FIG. 5, the items of guide information are list-displayed as the program guide in the broadcasting time sequence in the data display window 33.

Then, the computer 10 returns to the input standby in the status of this program guide kept displaying (S6). Herein, in the program guide of FIG. 5, a "prev. " button 41 and a "next" button 42 are also displayed in a lower bar, and, when the button 41 or 42 is pressed, the previous or next guide information is requested.

To be specific, if the "next" button 42 is pressed through the operation input unit 22, the request for the next guide information in the items of guide information kept displaying in the data display window 33 is inputted (S6), and the display control unit 16 reads the requested guide information from the storage unit 17 and displays this guide information (S7-S9). Similarly, when the "prev." button 41 is pressed, the display control unit 16 reads the guide information previous to the guide information kept displaying in the data display window 33 from the storage unit 17 and displays this guide information (S7-S9).

Note that the L-EIT of the one-segment broadcasting provides the guide information for only ten programs, and therefore it may happen that when the previous or next guide information is requested by pressing the button 41 or 42, the requested guide information does not exist in the storage unit 17 (S8).

If the guide information is deficient, the Web page acquiring unit 13 extracts a link destination specifying the Web site of the broadcasting station out of the information of the data broadcasting in the attached data received from the broadcasting station. In the data broadcasting, the links to other pages of the data broadcasting and the links to the Web sites on the network such as the Internet are described in BML (Broadcast Markup Language). As in the case of the program guide of the programs further than the 10 programs, the pages having a large quantity of information are provided normally by the Web sites.

Therefore, the Web page acquiring unit 13 extracts, from the information of the data broadcasting, the link (address) to the Web site of the broadcasting station in accordance with predetermined condition as to whether a tag, an intra-page location and a text are coincident or not. Then, the Web page acquiring unit 13 connects with the server of the link destination and thus acquires the Web page from the server (S10). It should be noted that without being limited to this technique of connecting with the server on the basis of the link of the on-air data broadcasting, an available scheme is that the storage unit 17 is previously stored with the addresses (e.g., URLs) of the servers of the respective broadcasting stations, then, when the guide information is requested, an associated piece of URL is extracted from the storage unit 17 on the basis of the broadcasting station specified by the guide information (attached data), and the connection to the server of this broadcasting station is established.

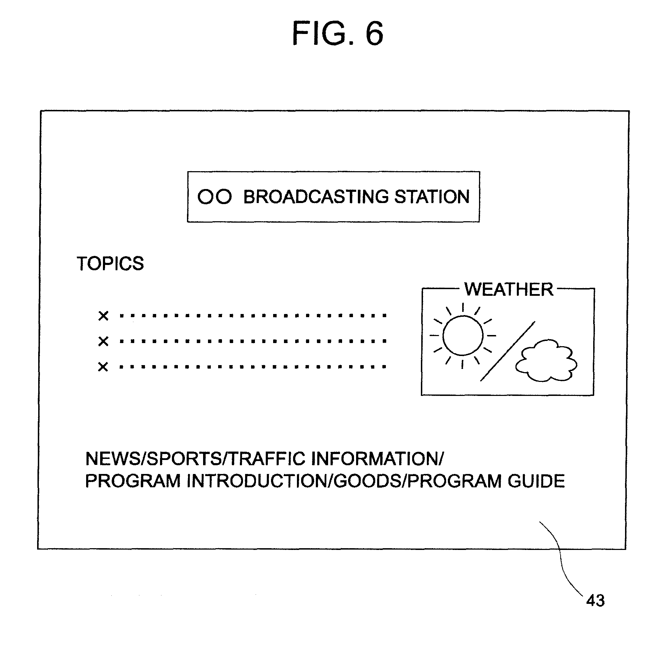

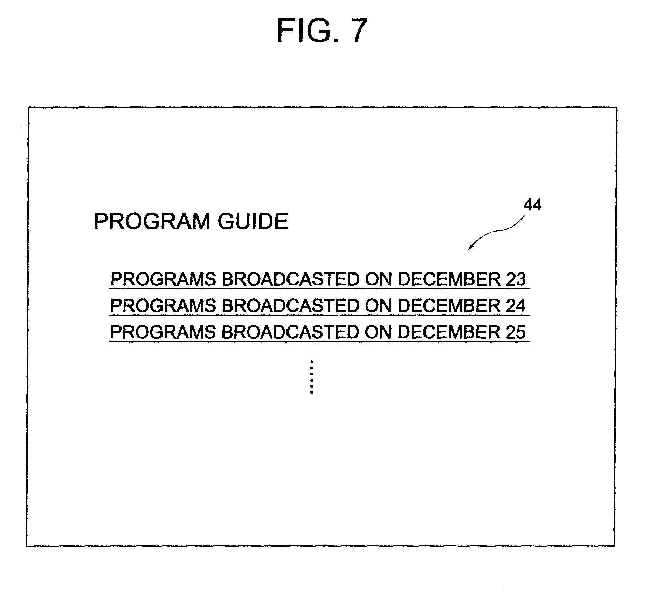

FIGS. 6-8 illustrate examples of the Web pages acquired by the Web page acquiring unit 13. The Web page acquiring unit 13 acquires, at first, a homepage (FIG. 6) specified by the link and acquires a Web page (FIG. 7) of the link destination, which contains a description of program guide in the page.

Note that the Web page acquiring unit 13 specifies the link (e.g. the program guide 43) according to the predetermined conditions as to whether the tag, the intra-page location and the text are coincident or not, and acquires the Web page (FIG. 7) of the link destination from the homepage in FIG. 6.

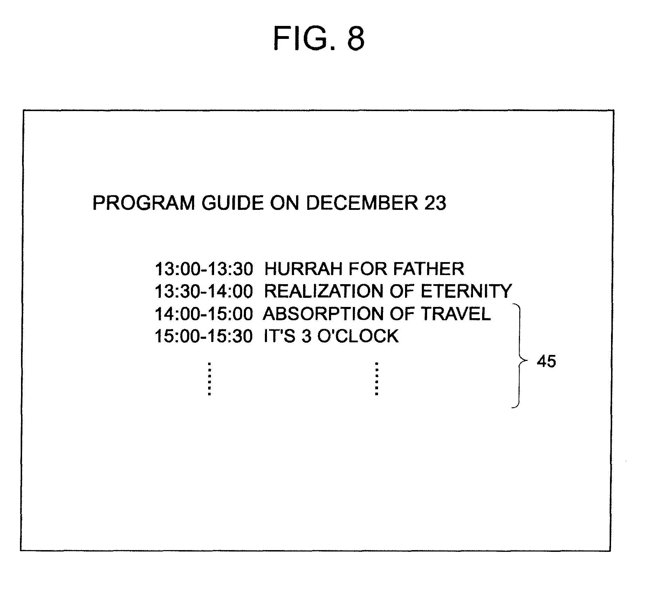

The Web page in FIG. 7 describes the links to the program guides for 8 days (some of the program guides are omitted in FIG. 7), and the Web page acquiring unit 13 acquires the Web page containing the description of the requested guide information therefrom. For example, in step 6, if the "next" button 42 is pressed in a status of displaying the guide information up to 14:00 on December 23, i.e., if the guide information after 14:00 on December 23 is deficient, the Web page acquiring unit 13 acquires the Web page (FIG. 8) of the link destination after 14:00 on December 23.

The complementation unit 14 generates the guide information based on the Web page illustrated in FIG. 8 (S11). For example, a program title and the broadcasting time (the broadcasting start time and the broadcasting end time) are searched out according to the predetermined conditions as to whether the tag, the intra-page location and the text are coincident or not, and are attached with a channel number, thus generating the guide information. As for this channel number, when requesting the guide information (S6), the preset channel number may be stored in the main memory or the storage unit 17, and the channel number associated with the address of the Web site may also be stored beforehand.

Then, the complementation unit gets the thus-generated guide information stored in the storage unit 17, thereby complementing the deficient guide information (S12).

The display control unit 16 displays this complemented guide information, i.e., the requested guide information (S9) .

Further, corresponding to the user's operation, in step 6, when a signal purporting that this displayed guide information has been selected is inputted through the operation input unit 22, the record control unit 18 reads the selected guide information from the storage unit 17 (S13) and reserves the recording based on the guide information. Namely, the record control unit 18 reserves the recording of the program that is broadcasted till the broadcasting end time since the broadcasting start time at the channel specified by the guide information (S14).

Thereafter, the computer 10 returns to the standby for the input (S8), and, when reaching the reserved broadcasting time, the record control unit 18 stores the received program data in the storage unit 17.

Moreover, in step 6, when receiving another input, e.g., an input purporting execution of a process of changing the channel, the volume, etc., the computer 10 executes this process (S15).

For example, when a "CH-" button 44 is pressed, the display control unit 16 displays, in the TV display window 32, the program of the channel located one before the channel kept displaying. Further, when a "CH+" button 45 is pressed, the display control unit 16 displays, in the TV display window 32, the program of the channel located one after the channel kept displaying. Note that the channel kept displaying is set also as the channel of the guide information or the channel of the data broadcasting, which is displayed in the data display window 33. Moreover, when a "CH" button 46 is pressed, the display control unit 16 displays a registered channel list.

Then, in step 8, when an input purporting termination is made, the display control unit 16 closes the main window 31 and terminates the process.

The guide information, though requested by selecting the buttons 36, 41 and 42 in the example given above, may also be requested by inputting a date/time, a period of time and a keyword. For example, if the guide information associated with the date/time, the period of time and the keyword is not stored in the storage unit 17, the Web page acquiring unit 13 acquires the Web page, and the complementation unit 14 complements the guide information.

Moreover, when the user inputs (requests) an operation that the guide information is acquired from the Web server, an available scheme is that a connection to the Web server is always made so as to complement the guide information.

As discussed above, according to the embodiment, though the EPG, which can be acquired from on the broadcasting waves based on the specifications of the one-segment broadcasting, covers the 10 programs at the maximum, in the case of receiving the request for the programs over the 10 programs, the deficient information is automatically complemented with the information given from the server of the broadcasting station, whereby the complemented EPG can be displayed.

Hence, similarly to the full-segment broadcasting, the recording of the program further than the tenth program can be reserved, and the operability of the record reservation can be improved.

### <Others>

The present invention is not limited to only the illustrated examples given above but can be, as a matter of course, changed in a variety of forms within the scope that does not deviate from the gist of the present invention.

The embodiment has exemplified the computer by way of the receiving device 10, however, available devices are a TV set, a radio, a recorder, a PDA (Personal Digital Assistant), a mobile phone and a portable audio player.

## Claims

1. A receiving device comprising:
a receiving unit to receive broadcasting waves multiplexed with a program and attached data from a broadcasting station;
a guide information extracting unit to extract guide information from the received attached data;
a Web page acquiring unit to acquire, if the guide information extracted from the attached data is deficient, a Web page provided by a server by establishing a connection with the server specified by the attached data; and
a complementation unit to generate further pieces of guide information from the Web page and to complement the guide information with the generated pieces of guide information.

2. The receiving device according to claim 1, further comprising a display control unit to get the guide information displayed on a display unit.

3. The receiving device according to claim 1 or 2, further comprising a record control unit to get a program recorded in a storage unit on the basis of the guide information.

4. The receiving device according to any one of claims 1 through 3, wherein the Web page acquiring unit, if guide information other than the guide information extracted from the attached data is requested or if guide information other than the post-complementing guide information is requested, determines that the guide information is deficient and acquires the Web page from the server.

5. A receiving method executed by a receiving device, said method including:
a step of receiving broadcasting waves multiplexed with a program and attached data from a broadcasting station;
a step of extracting guide information from the received attached data;
a step of acquiring, if the guide information extracted from the attached data is deficient, a Web page provided by a server by establishing a connection with the server specified by the attached data; and
a step of generating further pieces of guide information from the Web page and complementing the guide information with the generated pieces of guide information.

6. The receiving method according to claim 5, wherein a display unit is made to display the guide information.

7. The receiving method according to claim 5 or 6, wherein a storage unit is made to record a program on the basis of the guide information.

8. The receiving method according to anyone of claims 5 through 7, wherein if guide information other than the guide information extracted from the attached data is requested or if guide information other than the post-complementing guide information is requested, it is determined that the guide information is deficient, and the Web page is acquired from the server.

9. A receiving program to make a receiving device execute:
a step of receiving broadcasting waves multiplexed with a program and attached data from a broadcasting station;
a step of extracting guide information from the received attached data;
a step of acquiring, if the guide information extracted from the attached data is deficient, a Web page provided by a server by establishing a connection with the server specified by the attached data; and
a step of generating further pieces of guide information from the Web page and complementing the guide information with the generated pieces of guide information.

10. The receiving program according to claim 9, wherein a display unit is made to display the guide information.

11. The receiving program according to claim 9 or 10, wherein a storage unit is made to record a program on the basis of the guide information.

12. The receiving program according to any one of claims 9 through 11, wherein if guide information other than the guide information extracted from the attached data is requested or if guide information other than the post-complementing guide information is requested, it is determined that the guide information is deficient, and the Web page is acquired from said server.
